(19) Europäisches Patentamt
European Patent Office
Office européen des brevets

(11) **EP 1 430 674 B1**

(12) **EUROPÄISCHE PATENTSCHRIFT**

(45) Veröffentlichungstag und Bekanntmachung des Hinweises auf die Patenterteilung:
**29.04.2009   Patentblatt 2009/18**

(21) Anmeldenummer: **01274578.2**

(22) Anmeldetag: **28.09.2001**

(51) Int Cl.:
***H04L 25/03*** *(2006.01)*

(86) Internationale Anmeldenummer:
**PCT/DE2001/003727**

(87) Internationale Veröffentlichungsnummer:
**WO 2003/036892 (01.05.2003 Gazette 2003/18)**

(54) **VORRICHTUNG UND VERFAHREN ZUR UNTERDRÜCKUNG VON PERIODISCHEN STÖRSIGNALEN**

DEVICE AND METHOD FOR SUPPRESSING PERIODIC INTERFERENCE SIGNALS

DISPOSITIF ET PROCEDE DE SUPPRESSION DE SIGNAUX PARASITES PERIODIQUES

(84) Benannte Vertragsstaaten:
**DE FR GB**

(43) Veröffentlichungstag der Anmeldung:
**23.06.2004   Patentblatt 2004/26**

(73) Patentinhaber: **Palm, Inc.**
**Sunnyvale, CA 94085-2801 (US)**

(72) Erfinder: **KLINKE, Stefano, Ambrosius**
**50169 Kerpen (DE)**

(74) Vertreter: **Turi, Michael**
**Samson & Partner**
**Patentanwälte**
**Widenmayerstrasse 5**
**80538 München (DE)**

(56) Entgegenhaltungen:
**EP-A- 0 704 983       US-A- 5 682 404**
**US-A- 6 011 814       US-A- 6 134 265**

**Beschreibung**

Die vorliegende Erfindung bezieht sich auf eine Vorrichtung und ein Verfahren zur Unterdrückung von periodischen Störsignalen und insbesondere auf eine Vorrichtung und ein Verfahren zur Unterdrückung von periodischen Störungen im Audiofrequenzbereich, die beispielsweise von einem digitalen Telekommunikationssystem bei der Datenübertragung verursacht und in z.B. ein mobiles Telekommunikationsendgerät oder ein externes Geräte wie z.B. ein Hörhilfegerät eingekoppelt werden.

In einer Vielzahl von digitalen Telekommunikationssystemen erfolgt eine Datenübertragung zwischen einem mobilen Telekommunikationsendgerät wie z.B. einem Mobiltelefon und einer zugehörigen Basisstation über ein gepulstes Hochfrequenzsignal mit einer vorbestimmten Trägerfrequenz. Für ein sogenanntes GSM-Telekommunikationssystem (Global System For Mobile Communications) beträgt die Trägerfrequenz 900 Megahertz und eine Impulsfrequenz ca. 217 Hz. Im Falle eines DECT-Telekommunikationssystems beträgt dagegen die Trägerfrequenz 1800 Megahertz und die zugehörige Impulsfrequenz 100 Hz. Ein auf GSM basierender weiterer Standard ist der DCS 1800-Standard, der ebenfalls bei einer Trägerfrequenz von 1800 Megahertz arbeitet. Bei digitalen Telekommunikationssystemen werden somit eine Vielzahl von Trägerfrequenzen mit unterschiedlichen Impulsfrequenzen verwendet, weshalb die Endgerätehersteller zunehmend sogenannte Dual-Band- bzw. Triple-Band-Endgeräte zur Implementierung der verschiedenen Standards entwickeln.

Insbesondere das gepulste Hochfrequenzsignal bereitet hierbei oft Probleme. Das gepulste Hochfrequenzsignal wird beispielsweise durch die nicht lineare FET-Kennlinie eines im Endgerät vorhandenen Mikrofons demoduliert und verursacht so zum Teil deutlich wahrnehmbare Störungen im Audiofrequenzbereich.

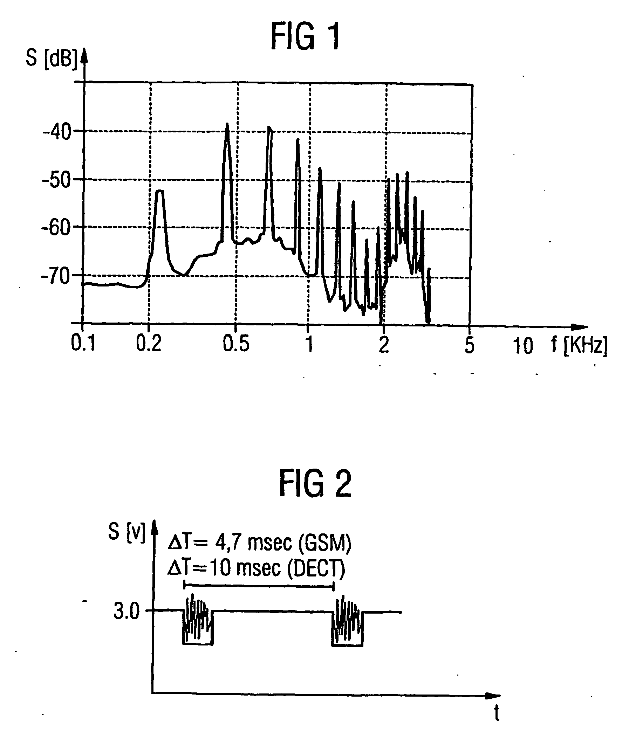

Figur 1 zeigt eine vereinfachte Darstellung eines Störspektrums, wie es am Ausgang einer durch ein derartiges gepulstes Hochfrequenzsignal gestörten Signalquelle wie z.B. einem Mikrofon ausgegeben wird.

Figur 2 zeigt eine vereinfachte Darstellung des zugehörigen gepulsten Hochfrequenzsignals bzw. periodischen Störsignals, wie es beispielsweise in GSM- oder DECT-Telekommunikationssystemen auftritt. Beim GSM-Standard werden gemäß Figur 2 in einem zeitlichen Abstand $\Delta T$ von ca. 4,7 Millisekunden Hochfrequenzimpulse übertragen, die die eigentlichen Informationen enthalten. Beim DECT-Standard beträgt dieser zeitliche Abstand $\Delta T$ 10 Millisekunden und entspricht einer Frequenz von 100 Hz im Gegensatz zu 217 Hz bei GSM. Diese periodischen Störsignale können nunmehr in einer gedruckten Leiterplatte und insbesondere an einer Signalquelle wie z.B. einem Mikrofon eingebracht werden, wodurch sich die in Figur 1 dargestellten Störspitzen ergeben.

Herkömmliche Vorrichtungen und Verfahren zur Unterdrückung dieser periodischen Störsignale basieren im Wesentlichen auf einer Abschirmung der Funkeinstrahlung durch beispielsweise ein leitfähiges Abschirmgehäuse der Signalquelle bzw. ein leitfähiges Mikrofongehäuse. Hierbei ist zu beachten, dass das Gehäuse möglichst vollständig geschlossen ist. Eine optimale Wirkung wird meist durch eine metallische Abschirmung erreicht. Die Kosten für eine derartige Abschirmung sind jedoch insbesondere bei Geräten wie z.B. einem mobilen Telekommunikationsendgerät und/oder einem Hörhilfegerät außerordentlich kostspielig und darüber hinaus platzintensiv.

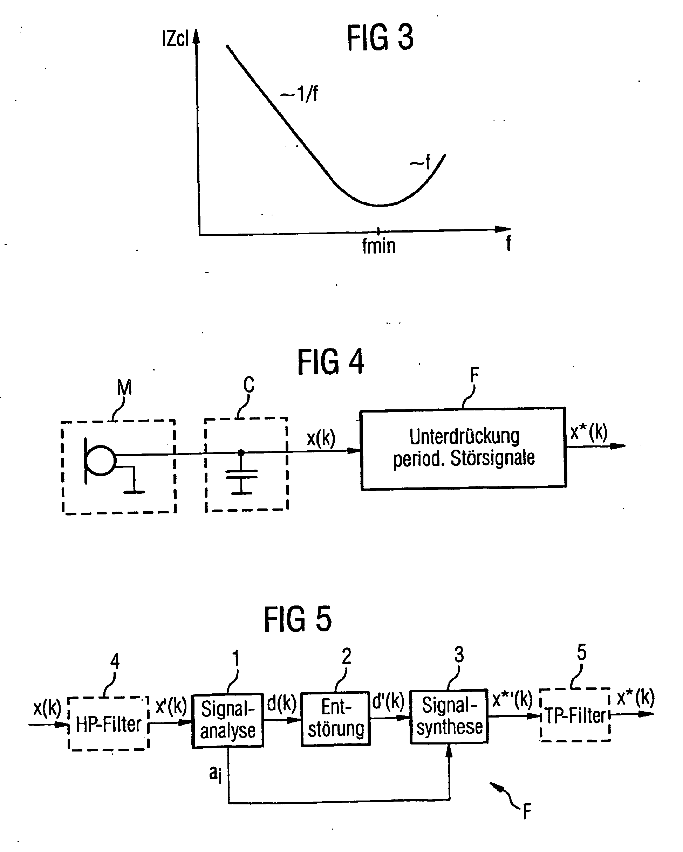

Eine weitere Möglichkeit zur Unterdrückung dieser periodischen Störsignale besteht üblicherweise darin, die leitungsgebundene Einkopplung durch eine Filterung zu beseitigen. Hierbei werden in der Regel Entstörkondensatoren verwendet, die räumlich nahe am Feldeffekttransistor (FET) des Mikrofons angebracht werden, um dort das periodische Hochfrequenzstörsignal möglichst stark zu dämpfen. Die Auswahl des Kondensators ist hierbei besonders kritisch, da der Einfluß parasitärer Induktivitäten bei hohen Frequenzen stark zunimmt und die Impedanz des Kondensators den in Figur 3 dargestellten Verlauf hat. Folglich wird eine optimale Entstörung nur mit einem Kondensator erzielt, dessen Impedanz für die jeweilige Frequenz des Störsignals minimal ist. Nachteilig ist hierbei jedoch, dass derartige mit Kondensatoren abgestimmte Signalquellen bzw. Mikrofone deutlich mehr kosten als herkömmliche Standardelektretmikrofone. Ferner muss für jedes neue Telekommunikationsendgerät bzw. Handymodell oder auch jeden Typ von Hörhilfegerät neue Signalquellen bzw. Mikrofone entwickelt werden, da die Hardwareumgebung wie z.B. das Leiterplatten-Layout des Endgeräts bzw. der Hörhilfe die Eigenschaften des Entstörkondensators beeinflusst. Ein weiterer Nachteil besteht darin, dass für jede Trägerfrequenz ein jeweiliger Entstörkondensator benötigt wird, so dass für ein Dual-Band-Gerät Signalquellen mit zwei Entstörkondensatoren und für ein Triple-Band-Gerät Signalquellen mit sogar drei Entstörkondensatoren notwendig sind.

Der Erfindung liegt daher die Aufgabe zu Grunde eine Vorrichtung und ein Verfahren zur Unterdrückung von periodischen Störsignalen zu schaffen, wobei eine deutliche Kostenreduktion bei verbesserter Entstörung ermöglicht wird.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 18 gelöst.

Insbesondere durch die Verwendung eines Signalanalysators zum Ausgeben eines Fehlersignals und dazugehöriger Koeffizienten auf der Grundlage eines gestörten Nutzsignals, einer Entstöreinheit zum Erzeugen eines entstörten Fehlersignals mit reduzierten periodischen Störsignalen auf der Grundlage des Fehlersignals und eines Signalsynthetisierers zum Rückgewinnen eines entstörten Nutzsignals auf der Grundlage des entstörten Fehlersignals und der Koeffizienten erhält man eine hervorragende Unterdrückung von periodischen Störsignalen. Die Anwendung der Entstöreinheit auf das vom Signalanalysator erzeugte Fehlersignal wirkt sich hierbei besonders positiv auf unangenehm empfundene Nachhalleffekte aus, die üblicherweise auftreten würden, wenn die Entstöreinheit unmittelbar auf das gestörte Nutzsignal angewendet wird.

Vorzugsweise besteht der Signalanalysator aus einem FIR-Filter (Finite Impulse Response) zum Ausgeben eines Prädiktionsfehlersignals und dazugehöriger Prädiktorkoeffizienten auf der Grundlage eines Sprachsignals und der Signalsynthetisierer aus einem IIR-Filter (Infinite Impulse Response) zum Rückgewinnen eines entstörten Sprachsignals auf der Grundlage eines entstörten Fehlersignals und der dazugehörigen Koeffizienten. Genauer gesagt werden erfindungsgemäß die bei der Sprachkodierung in digitalen Telekommunikationssystemen ohnehin verwendeten Sprachschätzer dazu verwendet die periodischen Störsignale zu unterdrücken. Insbesondere beim Einsatz in mobilen Telekommunikationsendgeräten erhält man durch die Verwendung der ohnehin bereits vorhandenen Elemente der Sprachkodierung eine außerordentlich kostengünstige Unterdrückung von periodischen Störsignalen. In gleicher Weise können derartige aus der Sprachkodierung bzw. Sprachschätzung bekannten Elemente auch in externen Geräten eingesetzt werden wie z.B. Hörhilfegeräten, wodurch eine weitere Miniaturisierung bei weiterer Störunterdrückung insbesondere gegenüber den von digitalen Übertragungssystemen erzeugten periodischen Störsignalen ermöglicht wird.

Vorzugsweise besteht der Signalanalysator aus einem linearen Prädiktor, der eine Kurzzeitprädiktion in einem Zeitbereich von 20 bis 400 Millisekunden durchführt. Da es sich bei digitalisierter Sprache in der Regel um sehr redundante Daten handelt, d.h. der Verlust oder die Störung einzelner Daten während der Übertragung in großen Grenzen toleriert werden kann, ermöglichen derartige lineare Kurzzeitprädiktoren die Erzeugung von ausreichend genauen Fehlersignalen und Koeffizienten zur weiteren Signalverarbeitung. Zur Bestimmung der jeweiligen Koeffizienten bietet sich hierbei insbesondere der sogenannte Levinson-Durbin-Algorithmus an, da dieser üblicherweise insbesondere in mobilen Endgeräten bei der Sprachkodierung verwendet wird und somit ohnehin zur Verfügung steht.

Zusätzlich kann am Signaleingang ein Hochpass-Filter zur Filterung des gestörten Nutzsignals und zur Verbesserung der Koeffizientenberechnung im Signalanalysator verwendet werden, wobei üblicherweise ein sogenannter Preenfasys-Filter eingesetzt wird. Die Störunterdrückung kann dadurch weiter verbessert werden. Signalausgangsseitig kann ferner optional ein Tiefpass-Filter zur Filterung des entstörten Nutzsignals und zur Kompensation des am Signaleingang verwendeten Hochpass-Filters eingesetzt werden, wobei dieses Filter üblicherweise ein sogenanntes Deenfasys-Filter darstellt.

Vorzugsweise führt die Entstöreinheit zum Erzeugen eines entstörten Störsignals auf der Grundlage des Fehlersignals eine Filterung im Zeitbereich oder im Frequenzbereich durch. Die Entstöreinheit ist hierbei beispielsweise ein Kammfilter mit Dämpfungsmaxima jeweils in der Umgebung der Grundfrequenz und der zugehörigen Harmonischen der periodischen Störsignale.

Vorzugsweise wird die Störunterdrückungsvorrichtung in einem drahtlosen Telekommunikationsendgerät ausgebildet, da eine Vielzahl von Komponenten bereits vorhanden sind und die Einkopplung auf Grund der unmittelbaren Nähe zwischen Sende- und Empfangsteil besonders problematisch ist. In gleicher Weise kann sie jedoch auch in externen Geräten und insbesondere in Hörhilfegeräten ausgebildet werden, bei denen ebenfalls eine starke Einkopplung auf Grund der unmittelbaren Nähe zwischen dem Endgerät des digitalen Telekommunikationssystems und dem externen Gerät vorliegt. Die Kosten von derartigen Hörhilfegeräten können auch bei weiterer Miniaturisierung und Störsicherheit dadurch weiter verringert werden.

In den weiteren Ansprüchen sind weitere vorteilhafte Ausgestaltungen der Erfindung gekennzeichnet.

Die Erfindung wird nachstehend anhand von Ausführungsbeispielen unter Bezugnahme auf die Zeichnung näher beschrieben.

Es zeigen:

Figur 1 eine vereinfachte Darstellung eines von einer Signalquelle erzeugten Frequenzspektrums mit periodischen Störsignalen;

Figur 2 eine vereinfachte zeitliche Darstellung des periodischen Störsignals;

Figur 3 eine vereinfachte grafische Darstellung eines mit einem Entstörkonderisator realisierten Impedanzverlaufs;

Figur 4 eine vereinfachte Blockdarstellung eines Gesamtsystems mit der erfindungsgemäßen Störunterdrückungsvorrichtung;

Figur 5 eine vereinfachte Blockdarstellung der erfindungsgemäßen Störunterdrückungsvorrichtung;

Figur 6 eine vereinfachte Blockdarstellung einer Entstöreinheit gemäß Figur 5; und

Figur 7 eine vereinfachte grafische Darstellung des Frequenzspektrums der Entstöreinheit gemäß Figur 6.

Figur 4 zeigt ein vereinfachtes Blockschaltbild einer Systemkonfiguration, in der die erfindungsgemäße Störunterdrückungsvorrichtung beispielsweise verwendet werden kann. Gemäß Figur 4 bezeichnet M eine Signalquelle bzw. ein Mikrofon zum Umwandeln eines akustischen Sprachsignals in ein elektrisches Sprachsignal bzw. Nutzsignal. Wie bereits vorstehend beschrieben wurde, kann auf Grund der Einkopplung von Störsignalen beispielsweise über die Leiterplatte oder über eine Funkeinstrahlung ein eigentliches Sprach-Nutzsignal mit einem Störsignal überlagert werden, wodurch sich ein gestörtes Nutzsignal x(k) ergibt. Eine derartige Überlagerung eines Nutzsignals mit einem periodischen Störsignal ist allgemein bekannt, wobei das vom Stromnetz verursachte Brummen ein typisches Beispiel darstellt.

Wie eingangs bereits beschrieben wurde können solche Störungen jedoch auch in digitalen Telekommunikationsgeräten bzw. in unmittelbarer Nähe dieser Endgeräte verwendeten Geräten geschehen, wobei in diesem Fall das periodische Störsignal von der Datenübertragung zwischen dem mobilen Telekommunikationsendgerät und der dazugehörigen Basisstation verursacht wird. Zur Unterdrückung derartiger periodischer Störsignale können die eingangs beschriebenen bekannten Maßnahmen durchgeführt werden, wie z.B. das Vorsehen einer Abschirmung der Signalquelle M und/oder das Vorsehen eines Störsignal-Vorfilters C, der üblicherweise einen Entstörkondensator aufweist und ebenfalls zur Reduzierung des periodischen Störsignals im Nutzsignal x(k) geeignet ist. Erfindungsgemäß erfolgt nunmehr gemäß Figur 4 eine Unterdrückung der periodischen Störsignale in einem Block F, wobei die bereits bekannten Maßnahmen zur Störunterdrückung optional zur erfindungsgemäßen Störunterdrückung hinzugefügt werden können.

Figur 5 zeigt eine vereinfachte Blockdarstellung der Störsignal-Unterdrückungsvorrichtung F gemäß Figur 4. Zur Vereinfachung der nachfolgenden Beschreibung wird zunächst davon ausgegangen, dass die optionalen Blöcke 4 und 5 in Figur 5 nicht vorhanden sind und somit das gestörte Nutzsignal x(k) - x'(k) ist. In gleicher Weise gilt x*'(k) - x*(k).

Im Wesentlichen besteht die Vorrichtung zur Unterdrückung der periodischen Störsignale hierbei aus einem Signalanalysator 1 zum Ausgeben eines Fehlersignals d(k) und dazugehöriger Koeffizienten $a_1$ auf der Grundlage des gestörten Nutzsignals bzw. eines gestörten elektrischen Sprachsignals. Auf der Grundlage des vom Signalanalysator 1 ausgegebenen Fehlersignals d(k) erzeugt eine Entstöreinheit 2 ein entstörtes Fehlersignal d'(k) mit reduzierten periodischen Störsignalen, welches an einen Signalsynthetisierer 3 weitergeleitet wird. Der Signalsynthetisierer 3 führt auf der Grundlage des entstörten Fehlersignals d'(k) und der vom Signalanalysator 1 erzeugten Koeffizienten $a_1$ eine Signalsynthese zum Rückgewinnen eines entstörten Nutzsignals x*(k) bzw. x*'(k) durch. Da die Entstörung auf ein bei der Signalanalyse erzeugtes Fehlersignal angewendet wird und nicht auf das eigentliche gestörte Nutzsignal x(k) bzw. x'(k), werden als unangenehm empfundene sogenannte Nachhalleffekte zuverlässig vermieden und bei geeigneter Anpassung der Entstöreinheit 2 an das periodische Störsignal eine Entstörung ohne Verlust der Nutzsignalqualität realisiert. Die Nutzsignalqualität des entstörten Nutzsignals x*(k) kann demzufolge wesentlich verbessert werden.

Erstes Ausführungsbeispiel

Gemäß einem ersten Ausführungsbeispiel wird die Störunterdrückungsvorrichtung in einem mobilen Telekommunikationsendgerät wie z.B. einem Mobiltelefon ausgebildet, wobei die in Figur 5 dargestellten Elemente zumindest teilweise zur Realisierung einer Sprachkodierung bereits vorhanden sind.

Bei digitalisierter Sprache handelt es sich üblicherweise um sehr redundante Daten. Zur Reduzierung einer Datenmenge sowie einer Anfälligkeit gegenüber Störungen werden daher insbesondere in drahtlosen Telekommunikationssystemen sogenannte Sprachkodierer verwendet, die unter Berücksichtigung der menschlichen Empfangsmöglichkeiten eine Signalqualität bzw.

Störunempfindlichkeit verbessern. Hierbei werden als sogenannte Sprachschätzer FIR-Filter (Finite Impulse Response) und/oder ein IIR-Filter zum Ausgeben eines Prädiktionsfehlersignals und dazugehörige Prädiktorkoeffizienten auf der Grundlage eines anliegenden Sprachsignals erzeugt. Erfindungsgemäß kann nunmehr der Signalanalysator 1 einen derartigen FIR-Filter zum Ausgeben eines Prädiktionsfehlersignals d(k) und zugehöriger Prädiktorkoeffizienten $a_i$ auf der Grundlage des anliegenden gestörten Sprachsignals x(k) verwenden. Hierbei kann beispielsweise ein linearer Prädiktor zum Durchführen einer linearen Prädiktion als Signalanalysator 1 verwendet werden, wobei vorzugsweise eine Kurzzeitprädiktion in einem Zeitbereich von 20 bis 400 Millisekunden durchgeführt wird. Derartige lineare Kurzzeitprädikatoren, wobei zur Berechnung der Prädiktorkoeffizienten $a_i$ vorzugsweise der sogenannte Levisson-Durbin-Algorithmus verwendet wird, sind wiederum bei der Sprachkodierung allgemein bekannt, weshalb nachfolgend auf eine detaillierte Beschreibung verzichtet wird.

Der Signalanalysator 1 erzeugt demzufolge ein gestörtes Fehlersignal d(k) sowie zugehörige Koeffizienten $a_i$, welche keine Störung beinhalten.

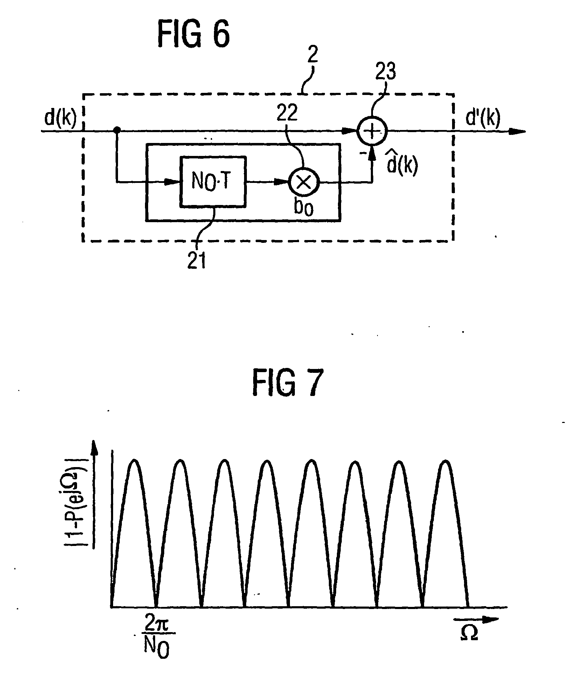

Gemäß Figur 5 wird nunmehr in der Entstöreinheit 2 die eigentliche Entstörung des periodischen Störsignals durchgeführt, wobei beispielsweise das in Figur 6 dargestellte Kammfilter verwendet werden kann.

Das vom Signalanalysator 1 erzeugte Fehlersignal besteht im Wesentlichen aus der Differenz des gestörten Nutzsignals x(k) und einem zugehörigen Schätzwert $\hat{x}(k)$, d. h. d(k) - x(k) - $\hat{x}(k)$. Gemäß Figur 6 werden nunmehr die periodischen Störsignale vom Fehlersignal d(k) durch eine angepasste Geräuschreduktion entfernt. Die Unterdrückung der Störkomponenten kann nach vielen Methoden sowohl mit einer Filterung im Zeitbereich als auch im Frequenzbereich durchgeführt werden. Nachfolgend sei lediglich eine mögliche Methode beispielhaft dargestellt, mit der ein periodisches Störsignal unterdrückt werden kann.

Die periodischen Störkomponenten im Frequenzbereich werden von einem periodischen Zeitsignal mit einer bestimmten Grundfrequenz verursacht (siehe Figuren 1 und 2). Wenn $N_0$ die Periodenlänge des Störsignals ist, so kann ein verbessertes bzw. zumindest teilweise entstörtes Fehlersignal d'(k) nach der folgenden Formel berechnet werden:

$$d'(k) = d(k) - b_0 \times d(k - N_0),$$

wobei d(k) das störbehaftete und d'(k) das verbesserte bzw. zumindest teilweise entstörte Fehlersignal darstellt. Beispielsweise handelt es sich hierbei um ein Kammfilter mit Dämpfungsmaxima jeweils in der Umgebung der Grundfrequenz und der zugehörigen Harmonischen des periodischen Störsignals. Die Dämpfungsmaxima können durch den Koeffizienten $b_0$ gesteuert werden, wobei wenn $b_0$ gleich 0 ist, keine Dämpfung der Störkomponenten erfolgt, wo hingegen wenn $b_0$ gleich 1 ist, eine maximal mögliche Dämpfung erreicht wird.

Der Faktor $b_0$ kann hierbei so gesteuert werden, dass in Präsenz eines Nutzsignals die Dämpfungsmaxima klein bleiben. Wenn das Nutzsignal dagegen nicht anwesend ist, können die Dämpfungsmaxima ihren maximalen Wert erreichen. Ein einfaches Verfahren, um die Steuerung des Faktors $b_0$ zu realisieren, ergibt sich aus der Formel:

$$b_o = \frac{\sum_{k=k_1}^{k=k_0} d(k)d(k-N_0)}{\sum_{k=k_1}^{k=k_0} d^2(k-N_0)}$$

Gemäß Figur 6 wird die Entstöreinheit 2 demzufolge aus einem Verzögerungsglied 21 mit $N_0 T$, wobei T der zeitliche Abstand des periodischen Störsignals ist, einem Multiplikator 22 zum Multiplizieren mit dem Faktor $b_0$ und einem Addierer 23 zur Realisierung der Differenz zwischen dem geschätzten Fehlersignal $\hat{d}(k)$ und dem eingehenden Fehlersignal d(k) durchgeführt wird.

Figur 7 zeigt eine vereinfachte grafische Darstellung des Frequenzverlaufs des in Figur 6 dargestellten Kammfilters.

Wie bereits in der Beschreibungseinleitung erwähnt wurde, kann nicht nur ein periodisches Störsignal, sondern es können insbesondere bei Dual-Band- und Triple-Band-Geräten auch mehrere periodische Störsignale auftreten. Eine Entstörung ist im Gegensatz zur herkömmlichen Filterung mittels Kondensatoren erfindungsgemäß außerordentlich leicht möglich, da nunmehr die Entstöreinheit 2 lediglich weitere Faktoren $b_1$, $b_2$, ... und dazugehörige Periodenlängen $N_1$, $N_2$, ... aufweisen. In allgemeiner Form ergibt sich demzufolge für das verbesserte Fehlersignal d'(k) folgende Formel:

$$d'(k) = d(k) - b_0 \times d(k-N_0) - b_1 \times d(k-N_1) - ...,$$

wobei sich die dazugehörigen Faktoren $b_1$, $b_2$ usw. in gleicher Weise wie der Faktor $b_0$ berechnen.

Im vorliegenden Ausführungsbeispiel kann demzufolge unter Verwendung von ohnehin vorhandenen Komponenten eine besonders kostengünstige Entstörung insbesondere bei sogenannten Dual-Band- und Triple-Band-Endgeräten realisiert werden.

Anschließend wird das verbesserte bzw. zumindest teilweise entstörte Fehlersignal d'(k) in Verbindung mit den Koeffizienten $a_i$ synthetisiert, wodurch man das entstörte Nutzsignal bzw. Originalsignal x*(k) erhält.

Zur weiteren Verbesserung der Koeffizientenberechnung im Signalanalysator 1 kann gemäß Figur 5 eingangsseitig ferner ein Hochpassfilter 4 zur zusätzlichen Hochpassfilterung des gestörten Nutzsignals x(k) und zum Erzeugen eines gefilterten aber noch gestörten Nutzsignals x'(k) verwendet werden. Üblicherweise wird als HP-Filter 4 ein sogenannter Preenfasys-Filter verwendet, das in Verbindung mit den aus der Sprachkodierung verwendeten Signalanalysatoren eine weitere Verbesserung herbeiführt. Zur Kompensation des optional eingeführten HP-Filters 4 kann optional auch ein TP-Filter 5 ausgangsseitig zur Tiefpass-Filterung des entstörten Nutzsignals x*'(k) verwendet werden, der schließlich das entstörte Nutzsignal x*(k) ausgibt. Ein derartiges TP-Filter besteht üblicherweise aus einem sogenannten Deenfasys-Filter.

In gleicher Weise können optional zur beschriebenen Störsignal-Unterdrückungsvorrichtung gemäß Figur 5 wiederum die bekannten Entstörvorfilter C sowie eine Abschirmung der Signalquelle M hinzugefügt werden, wodurch sich nunmehr der Einsatz von kostengünstigen Elektretmikrofonen ergibt. Die Entstörkondensatoren C wären hierbei unmittelbar an den Anschlusspins der Signalquelle bzw. des Mikrofons M zu befestigen. Der Vorteil des vorstehend beschriebenen Verfahrens bzw. der vorstehend beschriebenen Vorrichtung liegt demzufolge darin, dass mögliche Artefakten im Nutzsignal, die wegen einer herkömmlichen Geräuschreduktion entstehen können, durch die Signalanalyse und Signalsynthese deutlich angeschwächt werden können.

Zweites Ausführungsbeispiel

Gemäß einem weiteren Ausführungsbeispiel ist die erfindungsgemäße Vorrichtung bzw. das dazugehörige Verfahren nicht in ein das periodische Signal generierendes System integriert, sondern als externes Gerät realisiert. Derartige externe Geräte können insbesondere sogenannte Hörhilfegeräte darstellen, da sie üblicherweise in unmittelbarer Nähe eines jeweiligen mobilen Telekommunikationsendgeräts verwendet werden und somit der Einkopplung von vorstehend beschriebenen periodischen Störsignalen besonders ausgesetzt sind. Genauer gesagt wird die vorstehend beschriebene Störsignal-Unterdrückungsvorrichtung demzufolge in einem Hörhilfegerät realisiert, welches beispielsweise ein Hinter-dem-Ohr-Gerät (HdO), ein In-dem-Ohr-Gerät (IdO), ein Im-Kanal-Gerät (complete in the canal, CIC), ein Taschengerät, ein Headset, einen Kopfhörer und/oder ein Implantat darstellen kann. Wiederum können auf diese Weise verbesserte Hörhilfegeräte realisiert werden, die gegenüber den von digitalen Telekommunikationssystemen erzeugten periodischen Störsignalen im Wesentlichen unempfindlich sind.

Die Erfindung wurde vorstehend anhand von periodischen Störsignalen im GSM- und DECT-Telekommunikationssystem beschrieben. Sie ist jedoch nicht darauf beschränkt und umfasst in gleicher Weise periodische Störsignale, die durch andere drahtlose oder drahtgebundene Telekommunikationssysteme erzeugt werden. In gleicher Weise ist die Erfindung nicht auf mobile Telekommunikationsendgeräte und Hörhilfegeräte beschränkt, sondern umfasst in gleicher Weise auch andere Geräte, die derartigen periodischen Störsignalen besonders ausgesetzt sind.

Bezugszeichenliste

1   Signalanalysator
2   Entstöreinheit
3   Signalsynthetisierer
4   HP-Filter
5   TP-Filter
M   Signalquelle
C   Störsignal-Vorfilter
F   Störsignal-Unterdrückungsvorrichtung
21   Verzögerungsglied
22   Multiplikator
23   Addierer

**Patentansprüche**

**1.** Vorrichtung zur Unterdrückung von periodischen Störsignalen mit
einem Signalanalysator (1) zum Ausgeben eines Fehlersignals (d(k)) und zugehöriger Koeffizienten (a$_i$) auf der Grundlage eines gestörten Nutzsignals (x(k));
einer Entstöreinheit (2) zum Erzeugen eines entstörten Fehlersignals (d'(k)) mit reduzierten periodischen Störsignalen auf der Grundlage des Fehlersignals (d(k)); und
einem Signalsynthetisierer (3) zum Rückgewinnen eines entstörten Nutzsignals (x*(k)) auf der Grundlage des entstörten Fehlersignals (d'(k)) und der Koeffizienten (a$_i$).

**2.** Vorrichtung nach Patentanspruch 1,
**dadurch gekennzeichnet, dass** der Signalanalysator (1) ein FIR-Filter und/oder ein IIR-Filter zum Ausgeben eines Prädiktionsfehlersignals (d(k)) und dazugehöriger Prädiktorkoeffizienten (a$_i$) auf der Grundlage eines Sprachsignals (x(k)) und der Signalsynthetisierer ein IIR-Filter und/oder FIR-Filter zum Rückgewinnen des entstörten Nutzsignals (x*(k)) auf der Grundlage eines entstörten Prädiktionsfehlersignals (d'(k)) und dazugehöriger Prädiktorkoeffizienten ($a_i$) aufweist.

3.  Vorrichtung nach Patentanspruch 1 oder 2,
    **dadurch gekennzeichnet, dass** der Signalanalysator (1) einen linearen Prädiktor zum Durchführen einer linearen Prädiktion aufweist.

4.  Vorrichtung nach Patentanspruch 3,
    **dadurch gekennzeichnet, dass** der lineare Prädiktor (1) eine Kurzzeitprädiktion in einem Zeitbereich von 20 bis 400 Millisekunden durchführt.

5.  Vorrichtung nach einem der Patentansprüche 1 bis 4,
    **dadurch gekennzeichnet, dass** der Signalanalysator (1) die Koeffizienten ($a_i$) mittels Levinson-Durbin-Algorithmus bestimmt.

6.  Vorrichtung nach einem der Patentansprüche 1 bis 5,
    **gekennzeichnet durch** ein HP-Filter (4) zur Filterung des gestörten Nutzsignals (x(k)) und zur Verbesserung der Koeffizientenberechnung im Signalanalysator (1).

7.  Vorrichtung nach Patentanspruch 6,
    **dadurch gekennzeichnet, dass** das HP-Filter (4) ein Preenfasys-Filter aufweist.

8.  Vorrichtung nach einem der Patentansprüche 6 oder 7,
    **gekennzeichnet durch** ein TP-Filter (5) zur Filterung des entstörten Nutzsignals (x*(k)) und zur Kompensation des HP-Filters (4).

9.  Vorrichtung nach Patentanspruch 8,
    **dadurch gekennzeichnet, dass** das TP-Filter ein Deenfasys-Filter aufweist.

10. Vorrichtung nach einem der Patentansprüche 1 bis 9,
    **dadurch gekennzeichnet, dass** die Entstöreinheit (2) eine Filterung im Zeitbereich oder Frequenzbereich durchführt.

11. Vorrichtung nach einem der Patentansprüche 1 bis 10,
    **dadurch gekennzeichnet, dass** die Entstöreinheit (2) ein Kammfilter mit Dämpfungsmaxima jeweils in der Umgebung der Grundfrequenz und der zugehörigen Harmonischen der periodischen Störsignale aufweist.

12. Vorrichtung nach einem der Patentansprüche 1 bis 11,
    **gekennzeichnet durch** ein Störsignal-Vorfilter (C) zur Reduzierung des periodischen Störsignals im Nutzsignal (x(k)).

13. Vorrichtung nach einem der Patentansprüche 1 bis 12,
    **dadurch gekennzeichnet, dass** das gestörte Nutzsignal (x(k)) von einem Elektretmikrofon erzeugt wird.

14. Vorrichtung nach einem der Patentansprüche 1 bis 13,
    **dadurch gekennzeichnet, dass** sie in einem drahtlosen Telekommunikationsendgerät ausgebildet ist.

15. Vorrichtung nach einem der Patentansprüche 1 bis 13,
    **dadurch gekennzeichnet, dass** sie in einem Hörhilfegerät ausgebildet ist.

16. Vorrichtung nach Patentanspruch 15,
    **dadurch gekennzeichnet, dass** das Hörhilfegerät ein Hinter-dem-Ohr-Gerät, ein In-dem-Ohr-Gerät, ein Im-Kanal-Gerät, ein Taschengerät, einen Kopfhörer und/oder ein Implantat darstellt.

17. Vorrichtung nach einem der Patentansprüche 1 bis 16,
    **dadurch gekennzeichnet, dass** das periodische Störsignal ein GSM- und/oder DECT-Signal und/oder Bluetooth-Signal darstellt.

**18.** Verfahren zur Unterdrückung von periodischen Störsignalen mit den Schritten:

Durchführen einer Signalanalyse zum Ausgeben eines Fehlersignals (d(k)) und zugehöriger Koeffizienten ($a_i$) auf der Grundlage eines gestörten Nutzsignals (x(k));
Durchführen einer Entstörung zum Erzeugen eines entstörten Fehlersignals (d'(k)) mit reduzierten periodischen Störsignalen auf der Grundlage des Fehlersignals (d(k)); und
Durchführen einer Signalsynthese zum Rückgewinnen eines entstörten Nutzsignals (x*(k)) auf der Grundlage des entstörten Fehlersignals (d'(k)) und der Koeffizienten ($a_i$).

**19.** Verfahren nach Patentanspruch 18,
**dadurch gekennzeichnet, dass** bei der Signalanalyse eine FIR-Filterung und/oder IIR-Filterung zum Ausgeben eines Prädiktionsfehlersignals (d(k)) und zugehöriger Prädiktorkoeffizient ($a_i$) auf der Grundlage eines Sprachsignals (x(k)) und bei der Signalsynthese eine FIR-Filterung und/oder IIR-Filterung zum Rückgewinnen des entstörten Nutzsignals (x*(k)) auf der Grundlage eines entstörten Prädiktionsfehlersignals (d'(k)) und der Prädiktorkoeffizienten ($a_i$) durchgeführt wird.

**20.** Verfahren nach Patentanspruch 18 oder 19,
**dadurch gekennzeichnet, dass** bei der Signalanalyse eine lineare Prädiktion durchgeführt wird.

**21.** Verfahren nach Patentanspruch 20,
**dadurch gekennzeichnet, dass** die lineare Prädiktion eine Kurzzeitprädiktion in einem Zeitbereich von 20 bis 400 Millisekunden darstellt.

**22.** Verfahren nach einem der Patentansprüche 18 bis 21,
**dadurch gekennzeichnet, dass** bei der Signalanalyse die Koeffizienten ($a_i$) mittels Levinson-Durbin-Algorithmus bestimmt werden.

**23.** Verfahren nach **einem** der Patentansprüche 18 bis 22,
**gekennzeichnet durch** den Schritt Durchführen einer HP-Filterung zur Filterung des gestörten Nutzsignals (x(k)) und zur Verbesserung der Koeffizientenberechnung bei der Signalanalyse.

**24.** Verfahren nach Patentanspruch 23,
**dadurch gekennzeichnet, dass** bei der HP-Filterung eine Preenfasys-Filterung durchgeführt wird.

**25.** Verfahren nach einem der Patentansprüche 23 oder 24,
**gekennzeichnet durch** den weiteren Schritt einer TP-Filterung zur Filterung des entstörten Nutzsignals (x*(k)) und zur Kompensation der HP-Filterung.

**26.** Verfahren nach Patentanspruch 25,
**dadurch gekennzeichnet, dass** bei der TP-Filterung eine Deenfasys-Filterung durchgeführt wird.

**27.** Verfahren nach einem der Patentansprüche 18 bis 26,
**dadurch gekennzeichnet, dass** bei der Entstörung eine Filterung im Zeitbereich oder Frequenzbereich durchgeführt wird.

**28.** Verfahren nach einem der Patentansprüche 18 bis 27,
**dadurch gekennzeichnet, dass** bei der Entstörung eine Kammfilterung mit Dämpfungsmaxima jeweils in der Umgebung der Grundfrequenz und der dazugehörigen Harmonischen der periodischen Störsignale durchgeführt wird.

**29.** Verfahren nach einem der Patentansprüche 18 bis 28,
**gekennzeichnet durch** den zusätzlichen Schritt
Durchführen einer Störsignal-Vorfilterung zur Reduzierung des periodischen Störsignals im Nutzsignal (x(k)).

**30.** Verfahren nach einem der 18 bis 29,
**dadurch gekennzeichnet, dass** das gestörte Nutzsignal (x(k)) von einem Elektretmikrofon erzeugt wird.

**31.** Verfahren nach einem der Patentansprüche 18 bis 30,

**dadurch gekennzeichnet, dass** es in einem drahtlosen Telekommunikationsendgerät durchgeführt wird.

32. Verfahren nach einem der Patentansprüche 18 bis 30,
    **dadurch gekennzeichnet, dass** es in einem Hörhilfegerät durchgeführt wird.

33. Verfahren nach Patentanspruch 32,
    **dadurch gekennzeichnet, dass** das periodische Störsignal ein GSM- und/oder DECT-Signal und/oder Bluetooth-Signal darstellt.

**Claims**

1. An apparatus for suppressing periodic interference signals comprising

   a signal analyser (1) for outputting an error signal ($d(k)$) und associated coefficients ($a_i$) based on a disturbed useful signal ($x(k)$);
   a denoising unit (2) for generating a denoised error signal ($d'(k)$) with reduced periodic interference signals based on the error signal ($d(k)$); and
   a signal synthesizer (3) for recovering a denoised useful signal ($x^*(k)$) based on the denoised error signal ($d'(k)$) and the coefficients ($a_i$).

2. The apparatus of claim 1,
   **characterized in that** the signal analyser (1) has an FIR-filter and/or an IIR-filter for outputting a prediction error signal ($d(k)$) and associated predictor coefficients ($a_i$) based on a speech signal ($x(k)$) and the signal synthesizer has an IIR-filter and/or FIR-filter for recovering the denoised useful signal ($x^*(k)$) based on a denoised prediction error signal ($d'(k)$) and associated predictor coefficients ($a_i$).

3. The apparatus of claim 1 or 2,
   **characterized in that** the signal analyser (1) has a linear predictor for performing a linear prediction.

4. The apparatus of claim 3,
   **characterized in that** the linear predictor (1) performs a short-time prediction in a time range from 20 to 400 milliseconds.

5. The apparatus of any one of claims 1 to 4,
   **characterized in that** the signal analyser (1) determines the coefficients ($a_i$) by means of Levinson-Durbin-algorithm.

6. The apparatus of any one of claims 1 to 5,
   **characterized by** an HP-filter (4) for filtering the disturbed useful signal ($x(k)$) und for improving the calculation of coefficients in the signal analyser (1).

7. The apparatus of claim 6,
   **characterized in that** the HP-filter (4) has a Preenfasys filter.

8. The apparatus of claim 6 or 7,
   **characterized by** a LP-filter (5) for filtering the denoised useful signal ($x^*(k)$) and for compensating the HP-filter (4).

9. The apparatus of claim 8,
   **characterized in that** the LP-filter has a Deenfasys-filter.

10. The apparatus of any one of claims 1 to 9,
    **characterized in that** the denoising unit (2) performs filtering in the time domain or frequency domain.

11. The apparatus of any one of claims 1 to 10,
    **characterized in that** the denoising unit (2) has a comb filter with attenuation maxima in the proximity of the basic frequency and the associated harmonic of the periodic interference signals.

12. The apparatus of any one of claims 1 to 11,

**characterized by** an interference signal prefilter (C) for reducing the periodic interference signal in the useful signal (x(k)).

13. The apparatus of any one of claims 1 to 12,
   **characterized in that** the disturbed useful signal (x(k)) is generated by an electret microphone.

14. The apparatus of any one of claims 1 to 13,
   **characterized in that** it is formed in a wireless telecommunications terminal.

15. The apparatus of any one of claims 1 to 13,
   **characterized in that** it is formed in a hearing aid device.

16. The apparatus of claim 15,
   **characterized in that** the hearing aid device constitutes a behind-the-ear device, an inside-ear device, an in-canal device, a pocket device an earphone and/or an implant.

17. The apparatus of any one of claims 1 to 16,
   **characterized in that** the periodic interference signal constitutes a GSM and/or DECT signal and/or Bluetooth signal.

18. A method for suppressing periodic interference signals comprising the steps of:

   performing a signal analysis for outputting an error signal (d(k)) and associated coefficients ($a_i$) based on a disturbed useful signal (x(k));
   performing a denoising procedure for generating a denoised error signal (d'(k)) with reduced periodic interference signals based on the error signal (d(k)); and
   performing a signal synthesis for recovering a denoised useful signal (x*(k)) based on the denoised error signal (d'(k)) and the coefficients ($a_i$).

19. The method of claim 18,
   **characterized in that**, in the signal analysis, FIR-filtering and/or IIR-filtering is performed for outputting a prediction error signal (d(k)) and associated predictor coefficients (a;) based on a speech signal (x(k)) and, in the signal synthesis, an FIR-filtering and/or IIR-filtering is performed for recovering the denoised useful signal (x*(k)) based on a denoised prediction error signal (d'(k)) and the predictor coefficients ($a_i$).

20. The method of claim 18 or 19,
   **characterized in that** a linear prediction is performed in the signal analysis.

21. The method of claim 20,
   **characterized in that** the linear prediction constitutes a short-time prediction in a time range from 20 to 400 milliseconds.

22. The method of any one of the claims 18 to 21,
   **characterized in that** the coefficients ($a_i$) are determined by means of Levinson-Durbin-algorithm in the signal analysis.

23. The method of any one of the claims 18 to 22,
   **characterized by** the step of performing an HP-filtering for filtering the disturbed useful signal (x(k)) and for improving the calculation of coefficients in the signal analysis.

24. The method of claim 23,
   **characterized in that** a Preenfasys-filtering is performed in the HP filtering.

25. The method of claim 23 or 24,
   **characterized by** the further step of an LP-filtering for filtering the denoised useful signal (x*(k)) and for compensating the HP-filtering.

26. The method of claim 25,
   **characterized in that** a Deenfasys filtering is performed in the LP-filtering.

27. The method of any one of claims 18 to 26,
**characterized in that** a filtering in the time domain or the frequency domain is performed in the denoising procedure.

28. The method of any one of claims 18 to 27,
**characterized in that**, in the denoising procedure, a comb-filtering is performed with attenuation maxima in the proximity of the basic frequency and the associated harmonic of the periodic interference signals.

29. The method of any one of claims 18 to 28,
**characterized by** the additional step of performing an interference signal prefiltering for reducing the periodic interference signal in the useful signal (x(k)).

30. The method of any one of claims 18 to 29,
**characterized in that** the disturbed useful signal (x(k)) is generated by an electret microphone.

31. The method of any one of claims 18 to 30,
**characterized in that** it is performed in a wireless telecommunications terminal.

32. The method of any one of claims 18 to 30,
**characterized in that** it is performed in a hearing aid device.

33. The method of claim 32,
**characterized in that** the periodic interference signal constitutes a GSM and/or DECT signal and/or Bluetooth signal.


**Revendications**

1. Dispositif de suppression de signaux parasites périodiques comprenant

   un analyseur de signal (1) pour donner un signal d'erreur (d(k)) et des coefficients associés ($a_i$) sur la base d'un signal utile perturbé (x(k));
   une unité antiparasite (2) pour générer un signal d'erreur antiparasite (d'(k)) avec des signaux parasites périodiques réduits sur la base du signal d'erreur (d(k)); et
   un synthétiseur de signal (3) pour recouvrer un signal utile antiparasite (x*(k)) sur la base d'un signal d'erreur antiparasite (d'(k)) et des coefficients ($a_i$).

2. Dispositif selon la revendication 1,
**caractérisé en ce que** l'analyseur de signal (1) comporte un filtre RIF et/ou un filtre RII pour donner un signal d'erreur de prédiction (d(k)) et des coefficients prédicteurs associés ($a_i$) sur la base d'un signal de parole (x(k)) et le synthétiseur de signal comporte un filtre RII et/ou un filtre RIF pour recouvrer le signal utile antiparasite (x*(k)) sur la base d'un signal d'erreur de prédiction antiparasite (d'(k)) et de coefficients prédicteurs ($a_i$).

3. Dispositif selon la revendication 1 ou 2,
**caractérisé en ce que** l'analyseur de signal (1) comporte un prédicteur linéaire pour effectuer une prédiction linéaire.

4. Dispositif selon la revendication 3,
**caractérisé en ce que** le prédicteur linéaire (1) effectue une prédiction à court terme dans une plage de temporisation de 20 à 400 millisecondes.

5. Dispositif selon l'une des revendications 1 à 4,
**caractérisé en ce que** l'analyseur de signal (1) détermine les coefficients ($a_i$) au moyen d'algorithme de Levinson-Durbin.

6. Dispositif selon l'une des revendications 1 à 5,
**caractérisé par** un filtre PH (4) pour le filtrage du signal utile perturbé (x(k)) et pour l'amélioration du calcul des coefficients dans l'analyseur de signal (1).

7. Dispositif selon la revendication 6,
**caractérisé en ce que** le filtre PH (4) comporte un filtre de Preenfasys.

8. Dispositif selon la revendication 6 ou 7,
**caractérisé par** un filtre PB (5) pour le filtrage du signal utile antiparasite (x*(k)) et pour la compensation du filtre PH (4).

9. Dispositif selon la revendication 8,
**caractérisé en ce que** le filtre PB comporte un filtre de Deenfasys.

10. Dispositif selon l'une des revendications 1 à 9,
**caractérisé en ce que** l'unité antiparasite (2) effectue un filtrage dans le domaine temporel ou dans le domaine fréquentiel.

11. Dispositif selon l'une des revendications 1 à 10,
**caractérisé en ce que** l'unité antiparasite (2) comporte un filtre de peigne avec des maxima d'atténuation à proximité de la fréquence de base et de l'harmonique associée des signaux parasites périodiques.

12. Dispositif selon l'une des revendications 1 à 11,
**caractérisé par** un préfiltre de signaux parasites (C) pour la réduction du signal parasite périodique dans le signal utile (x(k)).

13. Dispositif selon l'une des revendications 1 à 12,
**caractérisé en ce que** le signal utile perturbé (x(k)) est généré par un microphone electret.

14. Dispositif selon l'une des revendications 1 à 13,
**caractérisé en ce qu'**il est formé dans un terminal de télécommunication sans fil.

15. Dispositif selon l'une des revendications 1 à 13,
**caractérisé en ce qu'**il est formé dans un appareil auditif.

16. Dispositif selon la revendication 15,
**caractérisé en ce que** l'appareil auditif constitue un appareil derrière l'oreille, un appareil dans l'oreille, un appareil dans le canal, un appareil de poche, un écouteur et/ou un implant.

17. Dispositif selon l'une des revendications 1 à 16
**caractérisé en ce que** le signal parasite périodique constitue un signal GSM et/ou DECT et/ou Bluetooth.

18. Procédé de suppression de signaux parasites périodiques comprenant les étapes:

effectuer une analyse de signal pour donner un signal d'erreur (d(k)) et des coefficients associés ($a_i$) sur la base d'un signal utile perturbé (x(k));
effectuer un antiparasitage pour générer un signal d'erreur antiparasite (d'(k)) avec des signaux parasites périodiques sur la base du signal d'erreur (d(k)); et
effectuer une synthèse de signal pour recouvrer un signal utile antiparasite (x*(k)) sur la base du signal d'erreur antiparasite (d'(k)) et des coefficients ($a_i$).

19. Procédé selon la revendication 18
**caractérisé en ce que**, dans l'analyse de signal, un filtrage RIF et/ou RII est effectué pour donner un signal d'erreur de prédiction (d(k)) et des coefficients prédicteurs ($a_i$) sur la base d'un signal de parole (x(k)) et, dans la synthèse de signal, un filtrage RIF et/ou un filtrage RII est effectué pour recouvrer le signal utile antiparasite (x*(k)) sur la base d'un signal d'erreur de prédiction (d'(k)) et des coefficients prédicteurs ($a_i$).

20. Procédé selon la revendication 18 ou 19
**caractérisé en ce qu'**une prédiction linéaire est effectuée dans l'analyse de signal.

21. Procédé selon la revendication 20
**caractérisé en ce que** la prédiction linéaire constitue une prédiction à court terme dans une plage de temporisation de 20 à 400 millisecondes.

22. Procédé selon l'une des revendications 18 à 21

**caractérisé en ce que** les coefficients ($a_i$) sont déterminés au moyen de l'algorithme de Levinson-Durbin dans l'analyse de signal.

23. Procédé selon l'une des revendications 18 à 22
**caractérisé par** l'étape
effectuer un filtrage PH pour le filtrage du signal utile perturbé ($x(k)$) et pour l'amélioration du calcul des coefficients dans l'analyse de signal.

24. Procédé selon la revendication 23,
**caractérisé en ce qu'**un filtrage de Preenfasys est effectué dans le filtrage PH.

25. Procédé selon la revendication 23 ou 24,
**caractérisé par** l'étape additionnelle d'un filtrage PB pour le filtrage du signal utile antiparasite ($x * (k)$) et pour la compensation de le filtrage PH.

26. Procédé selon la revendication 25,
**caractérisé en ce qu'**un filtrage de Deenfasys est effectué dans le filtrage PB.

27. Procédé selon l'une des revendications 18 à 26,
**caractérisé en ce que**, dans l'antiparasitage, un filtrage est effectué dans le domaine temporel ou dans le domaine fréquentiel.

28. Procédé selon l'une des revendications 18 à 27,
**caractérisé en ce que**, dans l'antiparasitage, un filtrage de peigne est effectué avec des maxima de atténuation à proximité de la fréquence de base et l'harmonique associée des signaux antiparasites périodiques.

29. Procédé selon l'une des revendications 18 à 28
**caractérisé par** l'étape additionnelle
d'effectuer un préfiltrage de signal antiparasite pour la réduction du signal antiparasite périodique dans le signal utile ($x(k)$).

30. Procédé selon l'une des revendications 18 à 29
**caractérisé en ce que** le signal utile perturbé ($x(k)$) est généré par un microphone electret.

31. Procédé selon l'une des revendications 18 à 30
**caractérisé en ce qu'**il est effectué dans un terminal de télécommunication sans fil.

32. Procédé selon l'une des revendications 18 à 30
**caractérisé en ce qu'**il est effectué dans un appareil auditif.

33. Procédé selon la revendication 32,
**caractérisé en ce que** le signal antiparasite constitue un signal GSM et/ou DECT et/ou Bluetooth.

# FIG 1

# FIG 2

# FIG 3

|Zc|

~1/f

~f

fmin          f

# FIG 4

M          C          F

x(k)    Unterdrückung    x*(k)
        period. Störsignale

# FIG 5

4          1          2          3          5

x(k)  HP-Filter  x'(k)  Signal-  d(k)  Ent-  d'(k)  Signal-  x*'(k)  TP-Filter  x*(k)
                        analyse        störung        synthese

$a_i$

F

# FIG 6

# FIG 7